# EUROPEAN PATENT APPLICATION

(11) **EP 1 909 213 A1**
(43) Date of publication of application: **09.04.2008**
(21) Application number: 06121882.2
(22) Date of filing: 06.10.2006
(51) Int. Cl.: G06K 1/12, G06K 19/06, G06K 19/14, G11B 20/00, G11B 20/10, G06F 21/00, G11B 20/12

(54) **Method for writing additional data onto an optical storage medium and respective optical data recorder**

(71) Applicant: Thomson Holding Germany GmbH & Co. OHG, 30625 Hannover (DE)
(72) Inventor: RICHTER, Hartmut, 78052, Villingen-Schwenningen (DE); Pilard, Gael, 78087, MOENCHWEILER (DE)
(74) Representative: Arnold, Klaus-Peter

(57) **Abstract**

The method for writing data with a laser beam onto an optical storage medium (M1, M2), in particular onto a prerecorded optical disk, comprises the step of writing data onto the storage medium (1) by erasing a data structure of already present prerecorded data with a modulation frequency, which is lower than the track modulation frequency of the prerecorded data. The optical data recorder comprises an optical pick-up with a laser having a light intensity, which is sufficiently high to bleach out or to destroy a prerecorded data structure of the optical storage medium (M1, M2).

## Description

### FIELD OF THE INVENTION

The invention relates to a method for writing additional data onto an optical storage medium, for example prerecorded CDs, DVDs or other optical data disks, which method is in particular suitable for a use with a consumer optical data recorder.

### BACKGROUND OF THE INVENTION

Optical storage media are media in which data are stored in an optically readable manner, for example by means of a laser beam, and an optical detector is used for detecting the reflected light of the laser beam when reading the data. In the meanwhile a large variety of optical media are known, which are operated with different laser wavelength, and which have different sizes for providing storage capacities from below one Gigabit up to over 50 Gigabits. The formats include read-only formats such as Audio CD and Video DVD, write-once optical media such as CD-R and DVD-R, DVD+R as well as rewritable formats like CD-RW, DVD-RW, DVD+RW, DVD RAM and phase change optical disks. Digital data are stored on these media along tracks in one or more layers of the media.

Prerecorded optical disks such as CDs and DVDs are very susceptible to theft in stores and even all along the supply chain. Also copy protection aspects such as e.g. digital write management (DRM), authentication, serialization and also storage of metadata will become more and more important in the future. For ROM disks and other prerecorded disks it may be desired sometimes to store additional data on the disk for the above reasons.

To handle above problems it is already known to use RFID (radio frequency identification) methods for prerecorded optical disks. RFID tags use a small integrated circuit comprising a radio frequency transponder for a data exchange with a base station. But this is still an expensive solution for present optical storage media and the RFID tag may generate further a disk unbalance which is not wanted for the operation of the optical disk.

For replicated DVDs it is known to write an individual barcode in a defined region of an inner lead-in area, known as a burst cutting area (BCA), as described in Annex K of the DVD physical specification. The BCA is created by a very powerful laser, for example by a ND:YAG or CO2 laser, which burns and darkens the aluminum or other reflective metal layer in the respective inner area of the prerecorded DVD. The marks created by this method are stripes, roughly 10 microns wide by 1200 microns long and provide a code in the form of a barcode, which contains up to 188 bytes. DVD players can read the BCA code by rotating at a constant angular velocity (1440 rpm), moving the optical pick-up to the BCA area, focusing on the information surface, and using a special decoding circuit for decoding the much lower frequency barcode signal, as compared with the normal DVD HF modulation signal. The marks have a decreased reflectivity and are detected as a drop-out of the read signal. A unique code in the burst cutting area can be used for copy protection or serialization systems.

But there are only a few DVD manufacturers which are equipped to write BCA on replicated disks, and because there is no player specification yet, support for a reading of the BCA code is not mandatory. In addition, a disadvantage is that BCA provides only a limited data capacity, and an additional production step with an expensive laser recorder is mandatory for writing the additional data onto the disk. A further description about the BCA can be found in WO 98/58368 and US 6,950,379.

In US 2006/0114755 a method for deterring theft of optical media is described, in which an optical disk is proposed, which is treated with a light sensitive material that impedes the ability of an optical disk player from reading data stored on the disk. During the initial phase, the light sensitive material will render the disk unreadable. Prior to a point of sale the light sensitive material of the optical media has to be activated by means of a light source having a predetermined wavelength, for providing the readability of the encoded data below the light sensitive material. The light sensitive material may cover the entire optical media or only particular sections. As a light sensitive material organic or in-organic materials may be used, which remain permanently transparent after activation.

New optical recording media with a super-resolution near field structure (Super-RENS), at present under development, offer the possibility to increase the data density of the optical recording medium by a factor of 3 in one dimension compared to present optical recording media. This is made possible by a so-called Super-RENS layer, which is placed directly above a data layer of the optical recording medium and which significantly reduces the effective size of the light spot used for reading from and/or writing to the optical recording medium. Examples of super-resolution optical media are described in WO 2004/032123 and by Tominaga et al., Appl. Phys. Lett. Vol. 73, No. 15, 12 October 1998.

### SUMMARY OF THE INVENTION

It is an object of the invention, to provide a method for writing data onto an optical storage medium, which data can be written and read by respective optical media players and recorders, in particular by consumer electronics recorders. It is further an object of the invention to provide a respective optical data recorder and a respective optical storage medium.

This object is achieved by a method as defined in the claim 1, by an optical data recorder as defined by the features of claim 9 and by an optical storage medium as defined by claim 11. Advantageous developments of the invention are specified in the subclaims.

According to the invention, the method uses a laser beam for writing data onto an optical storage medium, in particular onto a prerecorded optical disk, by erasing a present data structure with a modulation frequency, which is smaller than the track modulation frequency of the prerecorded data. The structure of the additional data onto the storage medium consists therefore of destroyed track sections, in which the marks of the prerecorded data are destroyed or invisible, and intact track sections, in which the marks of the prerecorded data are visible.

To distinguish between the data signal of the prerecorded data, which are still visible in the non-destroyed areas, and the data information of the additional data having the lower modulation frequency, when reading the disk, advantageously a low path filter can be used for filtering out the modulation frequency of the prerecorded data. For an easy separation of both modulation frequencies, the modulation frequency of the additional data should be in a range of about 1/4 to 1/100 of the modulation frequency of the prerecorded data.

The method can be used in particular for writing additional data onto a Super Resolution Near-field Structure (Super-RENS) ROM disk, by destroying the Super-RENS layer irreversibly for defining a first bit, and leaving areas undestroyed for defining a second bit, by using a laser power being sufficiently high to destroy the Super-RENS layer irreversibly. When reading later the tracks with the additional data, the Super-RENS effect does no more occur in the destroyed track sections, with the consequence that the original RF data signal of the prerecorded data cannot be recognized any more in these sections, but in the areas, in which the Super-RENS layer is not destroyed. The post-written data can be read out therefore by detecting the reflectivity change of the destroyed and the intact track sections, or by the change of the RF modulation.

The method can be used advantageously also for writing additional data onto other recordable disks: in the case of a DVD-R or DVD+R, which is based mainly on an organic dye for storing the information data, the written marks cannot be easily erased and overwritten, but the data structure can be erased by burning the spaces between the marks by continuously scanning the track with an elevated laser power. Therefore, an additional data structure can be embossed also on prerecorded write-once or re-writable DVDs by erasing a present data structure on the tracks by using a modulation frequency, which is lower than the modulation frequency of the prerecorded data. In this way a track with an alternating erased and non-erased data pattern can be realized, which can be used for example for storing additional information on a recorded disk. The method can be used correspondingly also for Blue-ray (BD) and High density (HD) disks, which use inorganic materials for the information layer.

The method can be used also for a ROM disk having an additional data layer above a prerecorded data structure. By using a laser with a sufficiently high power of a commercial recorder drive, the reflectivity of the additional layer can be changed partially for writing additional data onto the prerecorded ROM disk.

For writing the additional data onto the optical storage medium, advantageously a reserved area of the optical medium is used, for not deleting important data onto the disk. For a DVD, for example the burst cutting area (BCA) can be used.

### BRIEF DESCRIPTION OF THE DRAWINGS

- Fig. 1: A Super-RENS disk comprising destroyed sections of the Super-RENS layer;
- Fig. 2: a write-once optical disk comprising destroyed track sections of a prerecorded data track;
- Fig. 3a: the storage medium as shown in Figure 1;
- Fig. 3b: the storage medium as shown in Figure 2; and
- Fig. 3c: a detector signal, as generated when reading the optical storage media shown in Figures 3a and 3b.

### DETAILED DESCRIPTION OF PREFERRED EMBODIMENTS

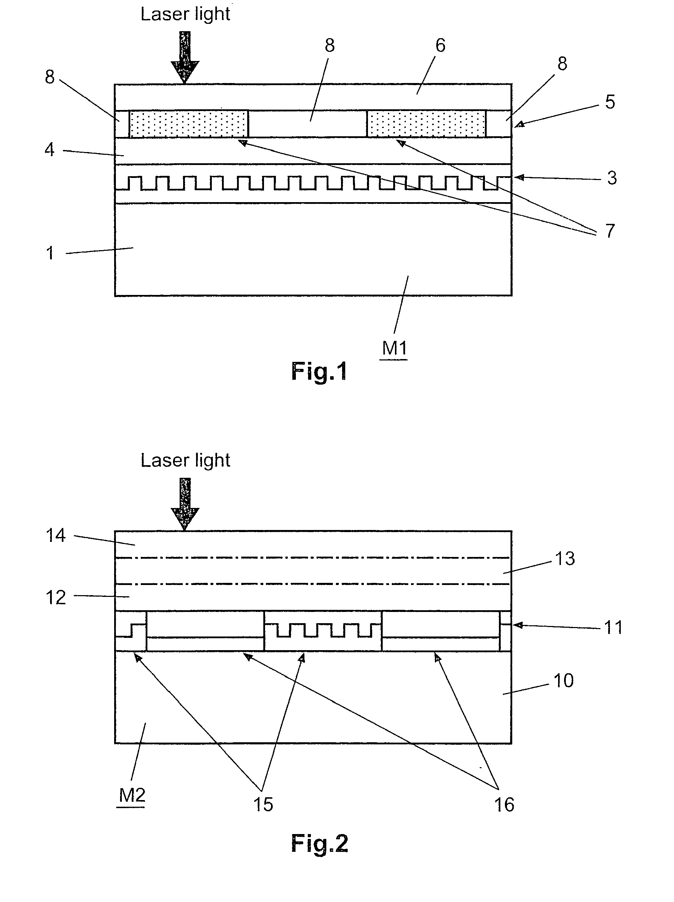

In Figure 1 in a cross section an optical storage medium M1 with a super-resolution near field structure (Super-RENS) is shown, which comprises a base layer 1, for example a polycarbonate substrate, on which a data layer 3 is arranged. The data layer 3 has an embossed data structure consisting of marks and spaces along a track, the marks and spaces having specified lengths in accordance with a defined modulation frequency. Data of this kind can be read by means of a laser beam by scanning the track for example with a constant linear velocity.

Above the data layer 3 a first and a second protective layer 4, 6 are arranged, between which a Super-RENS layer 5 is located. The Super-RENS layer 5 shows destroyed sections 7 between intact sections 8. The destroyed track sections 7 have been recorded with an optical data recorder, which has a laser with a sufficient laser power for destroying sections of the super-RENS layer 5. Tests have shown that a laser power for example of 6 mW, depending on the speed rotation of the disk, is already sufficient for currently available Super-RENS media, for providing light pulses, which are able to destroy the track sections 7 of the Super-RENS layer 5 irreversibly. The destroyed and the non-destroyed sections 7, 8 of the Super-RENS layer 5 can be considered therefore as an additional data layer on top of the prerecorded data layer 3.

By using a sufficiently high laser power, hence additional data can be recorded onto pre-recorded Super-RENS ROM-disks and Super-RENS recordable disks, by using a modulation frequency, which is smaller than the modulation frequency of the data layer 3. As can be seen in the embodiment of Figure 1, the modulation frequency as defined by the data layer 3 is about a factor of 8 higher than the modulation frequency as defined by the marks and spaces of the Super-RENS layer 5.

Super-RENS ROM disks and Super-RENS recordable optical disks, which are under development at present, use Super-RENS materials, for which a laser beam with a reading power of 1,5 - 3 mW, depending on the speed rotation of the disk, is necessary for reading the data of the data layer 3 below the Super-RENS layer 5. Therefore, by increasing the laser power by about a factor of two, additional data can be written onto the storage medium by using the Super-RENS layer 5. Of course the data layer 3 below the destroyed track sections 7 of the Super-RENS layer 5 cannot be read any more, but for writing additional data onto the Super-RENS layer 5 it is proposed to use only a small section of the Super-RENS disk, in particular a reserved area, which does not include relevant data for a user.

An optical data recorder for reading and writing additional data onto the Super-RENS layer 5 therefore needs only a laser power being a factor of two higher with regard to the reading power for writing the additional data. This power can be expected to be in the range of consumer data recorders for Super-RENS optical media, which will be soon available for users.

In Figure 2 in a cross section a write-once optical disk M2 is shown comprising a base layer 10, on which a data layer 11 is arranged. Above the data layer 11 further layers 12, 13, 14 are arranged for a protection of the data layer 11. The data layer 11 shows sections 15 of prerecorded data, and sections 16, in which the prerecorded data have been destroyed by erasing the spaces between the marks by means of a laser beam. For recordable write-once disks, such as DVD-R, DVD+R or Blue-ray disks, this can be done by scanning the track sections to be destroyed continuously with an elevated laser power.

For present recordable optical storage media, such as recordable DVD, recordable CD or Blue-ray disks, it is therefore also possible to write additional data onto a prerecorded optical disk by using this method. The method can be applied also to a conventional ROM disk, when the ROM disk is equipped with an additional layer, which can be changed in reflectivity by a high power laser of a commercial recorder drive.

It is proposed in particular to use a reserved area on the disk for the described post-writing technology to not overwrite important data on the disk. Therefore, no expensive recording system is required, for writing additional data on such kinds of optical disks. By a small modification of present optical data recorders, therefore a user can be provided with the capability to write individual additional data onto prerecorded optical disks.

The optical disks shown in figures 1 and 2 are simplified for explaining the present invention and show in a cross section only a small region of the respective optical disk. Further details about such kinds of optical storage media and the respective application are known for a person skilled in the art.

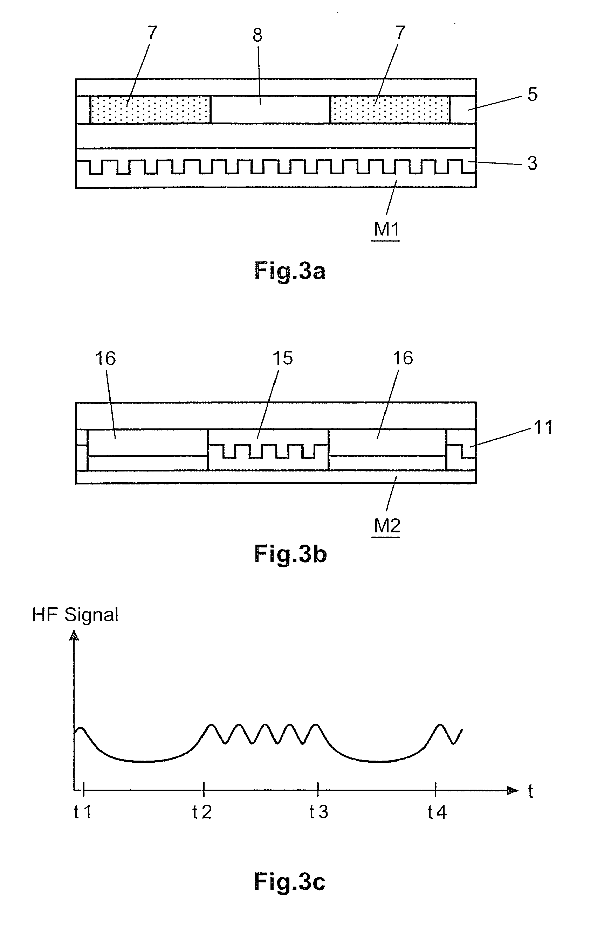

The reading of the additional data of the optical storage media shown in figures 1 and 2 is now described with regard to figures 3a - 3c: In figure 3a a Super-RENS optical disk M1 is shown in a cross section corresponding with the optical disk as shown in figure 1. In figure 3b a write once optical disk M2 is shown in accordance with the optical disk shown in figure 2. In figure 3c a resulting detector signal is shown, when reading the track sections of the optical storage media as shown in figures 3a and 3b.

When a laser beam illuminates the track section as shown in figure 3a, the reflected light as detected by a detector, when the optical disk is rotating, shows in a time interval t2 - t3, which corresponds to the not destroyed track sections 8 and 15, a high frequency (HF) signal corresponding to the prerecorded data. When the laser beam scans the destroyed track sections 7, 16 in time intervals t1 - t2 and t3 - t4, the original prerecorded data cannot be seen in case of the Super-RENS optical disk shown in figure 3a, because the Super-RENS layer 3 is no more transparent in these regions. The original data signal of these regions is therefore lost. In case of the optical disk shown in figure 3b, the original data information of the track sections 16 is also lost and no detector signal can be seen in the time intervals t1 - t2 and t3 - t4.

For the track regions 7 and 16, therefore no high frequency signal can be seen related to the prerecorded data, and the prerecorded data of interval t2 - t3 as such are useless, because essential parts are missing because of the destroyed track sections. But the detector signal contains now a second modulation signal originating from the destroyed and not destroyed sections as shown in figures 3a and 3b, because in intervals t1 - t2 and t3 - t4 the HF signal is missing, and in the interval t2 - t3 the HF signal is present. It can be seen therefore, that the layers 5 and 11 comprise an additional modulation signal, which is much lower than the original modulation signal of the prerecorded data of the layers 3 and 11.

For a separation of the two modulation signals, therefore a low pass filter can be used, for filtering off the high frequency modulation signal of the prerecorded data. For a clear separation of the two modulation frequencies, the modulation frequency of the post-written additional data should be at least by a factor of two lower as compared with the modulation frequency of the prerecorded data, and should be advantageously in a range of 1/4 to 1/100 of the modulation frequency of the prerecorded data. A low pass filter can be easily included in the signal path of the detection signal, for reading the additional data by means of a respective optical data recorder. For a writing of the additional data, only a software modification of the software of a controller of the optical data recorder is necessary.

The prerecorded data signals as shown in the data layer 3, also in the data layer 11, are simplified and correspond in these embodiments to the unmodulated carrier frequency, because alternatingly marks and spaces are shown. The destroyed and not destroyed sections 7, 8, 15, 16 correspond also to a two bit data structure with alternating marks and spaces. When comparing the periods of both modulation signals, it can be seen therefore, that the layers 5 and 11 comprise a modulation signal related to the post-recorded data, which is by a factor of 8 lower than the modulation signal of the prerecorded data of the layers 3 and 11.

The method can be used therefore in particular by a user for storing additional data for various applications on a variety of recordable and prerecorded disks, for example finalized DVD disks, by using a respective optical data recorder, which requires only small modifications with regard to present optical data recorders. Also for upcoming future storage media, such as Super-RENS disks, respective consumer optical data recorders can be modified for storing of additional data.

## Claims

1. Method for writing data with a laser beam onto an optical storage medium (M1, M2), in particular additional data onto a prerecorded optical disk, **with the step of**
writing data onto the storage medium (M1, M2) by erasing a data structure of already present prerecorded data with a modulation frequency, which is lower than the track modulation frequency of the prerecorded data.

2. Method according to claim 1, with the further step of using a laser power which is sufficiently high to destroy prerecorded track sections on the storage medium (M1, M2) for writing a data structure onto the storage medium (1) consisting of destroyed track sections (7, 16) and intact track sections (8, 15).

3. Method according to claim 2, with the further step of defining a two-bit data structure onto the optical storage medium with a first bit being defined by a destroyed track section (7, 16) and a second bit being defined by an intact track section (8, 15).

4. Method according to claim 1, 2 or 3, with the further step of using a modulation frequency for writing the data, which is less than a half, preferably in a range of 1/4 to 1/100, of the modulation frequency of the prerecorded data, and using a low path filter for filtering out the modulation frequency of the pre-recorded data, when reading the post-recorded data.

5. Method according to one of the preceding claims, wherein a reserved area of the optical storage medium (M1, M2), for example a burst cutting area, is used for writing the additional data onto the medium (M1, M2) .

6. Method according to one of the preceding claims, wherein the optical storage medium (M1) is a optical disk with a Super Resolution Near-field Structure, and wherein the laser power for writing the data is high enough to destroy irreversibly track regions of the Super-RENS layer (5).

7. Method according to one of the preceding claims 1 - 5, wherein the optical storage medium (M2) is a recordable optical storage medium, for example a recordable optical disk, and wherein the laser power for writing the data onto the storage medium is high enough for erasing spaces between marks of a user-recorded data structure (11) for post-writing of additional data onto the storage medium (M2).

8. Method according to one of the preceding claims 1 - 5, wherein the optical storage medium is an optical ROM disk, for example a DVD-ROM or a CD-ROM, which comprises an additional layer for writing additional data onto the optical ROM disk.

9. Optical data recorder comprising an optical pick-up with a laser having a light intensity, which is sufficiently high to bleach out or to destroy a prerecorded data structure of an optical storage medium (M1, M2), and comprising a microcontroller for applying a method for writing data onto the optical storage medium (M1, M2) according to one of the preceding claims.

10. Optical data recorder according to claim 9, wherein the method for writing data onto the optical storage medium (M1, M2) is usable by a user for providing an individualization of the optical storage medium.

11. Prerecorded optical storage medium comprising additional data onto the storage medium which are written by erasing a data structure of prerecorded data in accordance with one of the claims 1 - 8.
